# EUROPÄISCHE PATENTSCHRIFT

(11) **EP 2 627 533 B1**
(45) Veröffentlichungstag und Bekanntmachung des Hinweises auf die Patenterteilung: **21.06.2017**
(21) Anmeldenummer: 11767423.4
(22) Anmeldetag: 05.10.2011
(51) Int. Cl.: B60N 2/28

(54) **SITZVERANKERUNGSELEMENT FÜR KINDERSICHERHEITSSITZE ODER BABYTRÄGER**
SEAT ANCHORING ELEMENT FOR CHILD SAFETY SEAT OR INFANT CARRIER
ÉLÉMENT D'ANCRAGE DE SIÈGE POUR SIÈGES DE SÉCURITÉ D'ENFANT OU PORTE-BÉBÉ

(30) Priorität: 13.10.2010 DE 202010008803 U
(43) Veröffentlichungstag der Anmeldung: 21.08.2013
(73) Patentinhaber: Curt Würstl Vermögensverwaltungs-GmbH & Co. KG, 95032 Hof (DE)
(72) Erfinder: WÜRSTL, Jan-Stefan, 95194 Regnitzlosau (DE)
(74) Vertreter: Sperschneider, Alexandra
(86) Internationale Anmeldenummer: PCT/EP2011/067374
(87) Internationale Veröffentlichungsnummer: WO 2012/049048

(56) Entgegenhaltungen:
- EP-A2- 1 591 307
- US-A1- 2010 033 001
- US-A1- 2011 089 726

## Beschreibung

Die Erfindung betrifft ein Sitzverankerungselement für Kindersicherheitssitze oder Babyträger auf einem Fahrzeugsitz mit den im Oberbegriff des Anspruchs 1 angegebenen Merkmalen.

Ein Sitzverankerungselement der gattungsgemäßen Art ist aus der EP 1 591 307 A2 sowie aus der WO 2007/101212 bekannt. Das Sitzverankerungselement kann verschiedenartig ausgebildet sein. Es dient als Aufstellsicherungselement für einen Babyträger oder einen Kindersicherheitssitz auf einem Fahrzeugsitz. Einige dieser Sitzverankerungselemente können auch Führungsschienen zur Neigungswinkelverstellung eines aufsetzbaren Kindersicherheitssitzes aufweisen. Gemeinsam weisen diese Sitzverankerungselemente rückseitig entweder starre sogenannte ISOFIX-Verbinder für eine Anbindung an normgerecht angebrachte^n Fixierelementen auf, nämlich Querbolzen in dem Polster der Rückwand oder in dem Zwischenraum zwischen dem Sitz und der Rückenlehne des Fahrzeugsitzes, oder seitliche Gurte mit Konnektoren zum Befestigen an solchen Fixierelementen.

In einer Ausführungsform nach der WO 2007/101212 weist das Sitzverankerungselement seitliche, rückseitig zugängliche Gurte auf, die innerhalb des Sitzverankerungselementes an einem Spanngurt befestigt sind. Diese Gurte weisen am Ende Konnektoren zum Befestigen an den Fixierelementen, den ISOFIX-Ankern, an dem Fahrzeugsitz auf. Der gemeinsame Spanngurt ist auf einer Aufwickelvorrichtung, die mit einem seitlich vorstehenden Handrad betätigbar ist, aufwickelbar. Diese Aufwickelvorrichtung weist eine Ratsche auf, deren Gesperre beim Aufrollen wirksam ist und durch Abziehen einer Klinke durch Hervorziehen des Betätigungsrades auflösbar ist, um den Aufwickelgurtabschnitt wieder herausziehen zu können, um so einen größeren Abstand des Fahrzeugsitzes zu der Rückenlehne des fahrzeugeigenen Sitzes herstellen zu können.

Bei allen anderen Ausführungsformen sind die beiden Gurte aus der Rückwand des Sitzverankerungselementes nach hinten vorziehbar. Die Seitengurte und auch der gemeinsame Spanngurt, an dem diese z. B. angenäht sind, sind dabei innerhalb der Wandung so umgelenkt, dass durch Anziehen des aus der Oberseite der Wandung zugänglich vorstehenden Spanngurtendes die beiden seitlichen Gurte gespannt werden können. Eine vorgesehene Rückzugssicherungseinrichtung verklemmt den Spanngurt und kann mit einem Finger zum Lösen betätigt werden.

Es ist darüber hinaus bekannt, ein Sitzverankerungselement mittels eines Quergurtes an einem fahrzeugeigenen Sitz zu befestigen. Dazu wird der Quergurt durch Seitenöffnungen des Sitzverankerungselementes im hinteren Auflagebereich auf dem Fahrzeugsitz hindurchgezogen, und zwar durch Öffnungen oder Spalte, damit der Quergurt auf der Innenfläche des Sitzverankerungselementes aufliegt. Die beiden seitlich an dem Quergurt angebrachten Konnektoren oder Schlosszungen können mit den entsprechenden Gegenverbindungselementen am Sitz oder zwischen Sitzteil und Rückenlehne des Fahrzeugsitzes verbunden werden.

Bei den Befestigungen mittels Gurtsystemen ist der Nachteil gegeben, dass ein Anlegen des Sitzverankerungselementes an der Sitzfläche und mit der Rückseite der Wandung an der Rückenlehne des fahrzeugeigenen Sitzes unter Spannung nicht herstellbar ist. Zwar kann bis zu einem gewissen Grad eine Spannung über ein Stellrad erzielt werden, das mit einer Ratschentrommel verbunden ist, auf das der Spanngurt aufgerollt ist, das Drehmoment ist aber von der Bedienperson abhängig. Das seitlich vorstehende Bedienrad kann somit auch in entgegengesetzter Richtung bzw. kann aber auch versehentlich axial verschoben werden, wodurch die Entriegelung der Ratsche betätigt wird, so dass der Gurt dann in unbeabsichtigter Art und Weise in der Spannung nachlässt.

Befestigungen mittels teleskopartig ausschiebbaren Konnektoren (ISOFIX-Verbindungssystem) sind ferner beispielsweise aus der DE 298 12 471 U1 bekannt. Die Sitzverankerungselemente in unterschiedlicher Ausgestaltung sind aus der WO 2004/002773 A1, der EP 0 485 121 A, der EP 0 822 115 A, der WO2005/108155 A, der EP 1 197 378 A, der EP 0 967 113 A, der EP 1 369 294 A1, der EP 1 470 952 A1, der EP 1 714 826 A1, der EP 1 369 293 B1 und aus der EP 1 477 356 A1 bekannt. Auf derartige Sitzverankerungselemente werden Kindersitze, die aus einem Sitzteil und einem Rückenlehnenteil bestehen, oder alternativ auch Babyträger, nämlich Schalenliegesitze für Kleinkinder in den ersten Lebensmonaten, teilweise auch austauschbar aufgesetzt und daran durch Verriegelung gesichert gehalten.

Der vorliegenden Erfindung liegt die Aufgabe zu Grunde, ein Sitzverankerungselement der gattungsgemäßen Art so weiterzubilden, dass die Gurte auf einfache Weise mit geringem Kraftaufwand gespannt werden können, um einen sicheren Halt, z. B. an ISOFIX-Ankern, zu ermöglichen, die als Fixierelemente am Kraftfahrzeugsitz vorhanden sind, wobei das Betätigungselement einer solchen Spannvorrichtung bei aufgesetztem Babyträger nicht sichtbar und zugänglich sein soll und/oder die Befestigungsstangen eines ISOFIX-Verbindungssystem mit den gleichen Mitteln in das Sitzverankerungselement einziehbar sind. In einer weiteren Ausgestaltung soll vorgesehen sein, dass alternativ zu der Verwendung eigener Gurtsysteme zum Befestigen über Konnektoren auch Quergurte verwendet werden können, z. B. um den Babyträger oder den Kindersicherheitssitz auch in Verbindung mit einem Fahrzeugsitz verwenden zu können, der keinen ISOFIX-Anker bzw. Fixierelemente aufweist, um hieran die Konnektoren oder Schlosssysteme befestigen zu können.

Die Erfindung löst die Aufgabe durch die im Anspruch 1 angegebene Ausgestaltung des Sitzverankerungselementes.

Die Erfindung sieht vor, dass die Gurte des Gurtsystems oder mit den Stangen verbundene Gurte oder ein mit den einzelnen Gurten verbundener gemeinsamer Spanngurt auf einer Ratschentrommel der Spannvorrichtung aufwickelbar sind oder ist und nach Entriegelung eines Gesperres der Ratsche mindestens teilweise abwickelbar sind oder ist, welche Ratschentrommel in dem Sitzverankerungselement drehbar gelagert ist, und dass mit der Ratsche ein in dem Sitzverankerungselement verschwenkbar gelagerter Hebel gekoppelt ist, der in eine Ausnehmung in dem Sitzverankerungselement aus der aufgestellten Ratschenbetätigungsstellung zum Spannen der Gurte oder des Spanngurtes in eine versenkte Ruhestellung einschwenkbar ist, wobei mindestens die Achse des Lagers quer zur Längsachse des Sitzverankerungselement verläuft.

Spanneinrichtungen mit einer Ratschentrommel, die mittels eines Hebels mit einem hieran gelagerten, gegen die Kraft einer Feder verschiebbaren Mitnehmer, der in die Zahnlücken in der einen Bewegungsrichtung des Hebels fällt und in der anderen Bewegungsrichtung die Ratsche dreht, zum Spannen des Gurtes schrittweise gedreht werden kann, sind in verschiedensten Ausführungsformen bekannt und werden üblicherweise an Spanngurten zur Sicherung von Transportgut an einem Transportfahrzeug verwendet. Die Ratschentrommel ist in einem U-förmigen Träger gelagert, an dem ein Gurt befestigt ist, der am anderen Ende einen Haken und eine Öse zum Fixieren an einem Befestigungspunkt aufweist. In der Ratschentrommel befindet sich ein Einführspalt, in den der Spanngurt eingeschoben wird. Durch Betätigen des Hebels wird die Trommel über den Mitnehmer schrittweise gedreht und aufgerollt. Beidseitig an der Ratschentrommel befinden sich hierzu Ratschen in Form von Zahnkränzen mit sägezahnförmigen Zähnen, in die der Mitnehmer eingreift. An dem U-förmigen Träger ist ferner ein federbelasteter Riegel verschiebbar gelagert, der in die Zahnlücken beim Fortschalten automatisch eingreift und eine beiderseits kraftschlüssige Sperre sicherstellt. Dieser Riegel kann gegen die Kraft der Feder per Hand verschoben werden, um den aufgerollten Spanngurt wieder von der Ratschentrommel abrollen zu können.

Beispielsweise sind Spanneinrichtungen mit einer Ratschentrommel in unterschiedlichen Bauausführungen aus der DE 10 2009 043 506 A1 und aus der DE 202 11 937 U1 bekannt, die in den angegebenen Bauausführungen oder in einer beschriebenen vereinfachten Ausführung hier zur Anwendung kommen können, wobei der U-förmige Träger mit den seitlichen Lagerstellen für die Ratschentrommel in der Draufsicht auf den Boden des Sitzverankerungselementes befestigt wird. Dies kann beispielsweise durch Nietung oder durch Schraubverbindungen erfolgen.

Die Lage der Ratschenachse kann grundsätzlich frei gewählt werden, wenn der Spanngurt entsprechend in Lagerungsschlitzen und in Durchbrüchen der Wände des Sitzverankerungselementes geführt ist. Es können auch zwei Ratschentrommeln, also für jeden der einzelnen Gurte eine, vorgesehen sein, auf die diese aufwickelbar und getrennt spannbar sind. Die seitlichen Gurte sind mit Konnektoren versehen. Die einzelnen Ratschentrommeln sind an der Bodenwand des Sitzverankerungselementes montiert.

Es ist auch möglich, diese in Reihe, und zwar mit quer zur Längsachse des Sitzverankerungselementes verlaufender Achse zu befestigen und diese über einen gemeinsamen Hebel zu bedienen. Der Hebel kann auch losgelöst von der Drehachse der Ratschentrommel schwenkbar angeordnet sein. In diesem Fall müssen allerdings der Mitnehmer und das Gesperre so ausgebildet sein, dass diese funktionell bedienbar sind, um die Schwenkbewegung in eine Drehbewegung der Ratschentrommel zu transformieren. Gemäß der Erfindung soll die Achse des Lagers des Hebels stets quer zur Längsachse des Sitzverankerungselements angeordnet sein, was den Vorteil hat, dass die rückseitige Wand mit einer durchgehenden Ausnehmung versehen werden kann, in die der Hebel beim Verbringen in die Ruhestellung einschwenkbar und damit versenkbar ist.

Auf ein solches Sitzverankerungselement kann also ein bekannter Babyträger oder ein Kindersitz aufgesetzt und an den Befestigungspunkten, die dort vorgesehen sind, fixiert werden, ohne spezielle Anpassungen an die bauliche Anordnung des Sitzverankerungselementes vornehmen zu müssen. Die Anordnung hat darüber hinaus den Vorteil, dass der Hebel auch relativ lang ausgebildet sein kann, so dass die Ratsche auf einfache Weise mit wenig Kraft bedienbar ist. Auch kann die rückseitige Wandung des Sitzverankerungselementes für die Einbettung des Hebels über die gesamte Länge genutzt werden und der Hebel relativ flach ausgebildet sein. Die U-förmige Ausnehmung ist entsprechend auszuformen. Wenn der Hebel darüber hinaus obenseitig einen Handgriff aufweist, so ist in der rückseitigen Wandung des Sitzverankerungselementes eine entsprechende Ausnehmung vorzusehen, damit der Handgriff mit den Fingern hintergriffen werden kann, um ihn beim Befestigen des Sitzverankerungselementes auf dem Fahrzeugsitz bedienen zu können.

Damit der Hebel in der Ruhestellung in der Ausnehmung gesichert verankert ist, ist ferner eine Arretierung vorgesehen. Diese kann grundsätzlich an jedem Punkt der Länge des Hebels angebracht sein. Besonders vorteilhaft ist es aber, wenn sich die Arretierungseinrichtung im Bereich des Handgriffes, also am oberen Ende des Hebels, befindet. Die Arretierungseinrichtung kann, wie bei Hebelarretierung üblich, aus einem Riegel, einer Rastnase oder einem Arretierungsbolzen bestehen, der oder die an dem Hebel oder an einer Wand der Ausnehmung angebracht ist, und mit dem korrespondierenden Gegenelement mit dem anderen Teil zusammen wirkt. Wenn beispielsweise ein Arretierungsbolzen vorgesehen ist, so kann dieser z. B. obenseitig vorstehend am Handgriff vorgesehen sein und in eine Ausnehmung oder hinter eine Nase eines Federelementes greifen, das an der Rückwand des Sitzverankerungselementes befestigt ist. Das Federelement kann auch eine Aufnahme aufweisen, in die der Bolzen hineinrastet und mit einem Flansch gesichert gehalten ist. Zum Ausrasten muss der Hebel um das Maß des Flansches niedergedrückt werden, um das Federelement soweit verschwenken zu können, dass es über den Flansch vom Bolzen abgezogen werden kann und diesen freigibt. Es können auch in der Ausnehmung Rastnasen vorstehend vorgesehen sein, die sich verschwenken lassen und beim Einschwenken des Hebels hinter Sperrkanten greifen und mittels eines Betätigungsmechanismuses per Hand wieder verschwenkt werden, um eine Freigabe des Hebels zu ermöglichen. Es sind also viele Ausgestaltungsmöglichkeiten der Arretierungseinrichtung bekannter Art möglich. An einem der beiden Teile, also an dem Hebel oder an der Wand, müssen spezielle Betätigungselemente vorgesehen sein, die mit einer Entriegelungsmechanik zusammenarbeiten, damit die Arretierungseinrichtung entriegelt werden kann, um den Hebel in eine Ratschenbetätigungsstellung aus der Ruhestellung verbringen zu können, damit durch Hin- und Herbewegung die Ratsche jeweils um die überfahrene Zahnfolge oder um einzelne Teilungen fortschaltet.

Die Hebelanordnung hat den Vorteil, dass diese nicht nur für die Ratschenbetätigung nutzbar ist, sondern auch zur Fixierung des Sitzverankerungselementes an einem Fahrzeugsitz mittels eines Quergurtes verwendet werden kann, wenn z. B. keine ISOFIX-Anker im Sitz, also keine Fixierelemente in Form von Querbolzen, zur Verfügung stehen, sondern beispielsweise nur der Beckengurtabschnitt eines Dreipunktgurtes oder ein gesonderter Quergurt. Der Quergurt weist beispielsweise Schlosszungen auf, um eine Befestigung an den Schlössern des Fahrzeugsitzes zu ermöglichen, die für die Schlosszungen des Dreipunktsicherheitsgurtes am Fahrzeugsitz vorgesehen sind. Es versteht sich dabei von selbst, dass die Länge des Quergurtes den Befestigungspunkten entsprechend anzupassen ist, zu welchem Zweck solche Quergurte verlänger- und verkürzbar sind und an beiden Seiten Schlosszungen aufweisen, um in die Steckschlösser eingeführt werden zu können. Wird ein solcher Quergurt quer über die Ausnehmung gelegt, so wird der Quergurt beim Einschwenken des Hebels in die Ausnehmung eingezogen und seitlich umgelenkt, so dass ein zusätzlicher, seitlicher Halt bei gleichzeitigem Spannen des Quergurtes gegeben ist. Die unterschiedlichen Befestigungen sind nahezu gleichwertig, ob nun über seitliche, rückseitig herausgeführte einzelne Gurte mit Konnektoren eine Verbindung an den Fixierpunktelementen des Sitzes oder über einen Quergurt eine Befestigung an vorhandene Schlosssysteme erfolgt.

Das Sitzverankerungselement kann selbstverständlich auch zusätzlich teleskopartig nach hinten ausfahrbare Befestigungsstangen mit Konnektoren aufweisen, so dass auch hierüber eine Befestigung an Fixierelementen am Sitz, nämlich den ISOFIX-Ankern, erfolgen kann. Dies setzt aber immer voraus, dass diese soweit beabstandet voneinander angebracht sind, dass beide Konnektoren angebracht werden können. Die Lösung mit den Gurten hingegen gestattet auch die Befestigung, wenn die ISOFIX-Anker in einem größeren oder näheren Abstand zueinander stehen. Die erfinderische Lösung, nämlich die Verwendung einer Ratsche zum Befestigen des Sitzverankerungselementes an dem Fahrzeugsitz ist auch in Verbindung mit ISOFIX-Verankerungssystemen einsetzbar, wenn die Konnektoren an Stangen befestigt sind, die in Führungen des Sitzverankerungselementes bewegbar und in diese einziehbar sind. Zum Einziehen, also zum Spannen, der Verbindung können an den Stangen Gurte befestigt sein, die entweder auf gesonderten Ratschentrommeln aufgewickelt werden oder an einem gemeinsamen Spanngurt befestigt sind, der auf einer einzigen Ratschentrommel aufwickelbar ist. Es versteht sich dabei von selbst, dass die Gurte so umgelenkt werden müssen, dass die gewünschte Zugkraft beim Einziehen der Stangen ausgeübt wird. Alternativ kann aber auch vorgesehen sein, dass beide Stangen über ein Brückenelement miteinander verbunden sind und an diesem Brückenelement ein Spanngurt befestigt ist, der über die Ratsche in gewünschter Weise spannbar ist.
Grundsätzlich lässt sich also die Erfindung auch auf derartig ausgestaltete Sitzverankerungselemente anwenden. Sie ist an keine spezielle Bauausführung des Sitzverankerungselementes gebunden.
Um eine einfache Bedienung des Hebels beim Auflösen der Arretierung zu ermöglichen, können im Handgriff zwei seitlich vorstehende Betätigungselemente vorgesehen sein, die gegen die Kraft einer Federanordnung verschiebbar gelagert sind und auf eine Verriegelungsmechanik einwirken, die die Rastnase, den Riegel oder den Bolzen festhalten. Das Sitzverankerungselement kann auch zur leichteren Zugänglichkeit des Hebels an der Rückseite eine hochgezogene, schräg verlaufende Wandung aufweisen, die sich an der Rückenlehne des Fahrzeuges abstützt. In diese Wandung ist dann mittig die Ausnehmung schräg von unten nach oben und hinten verlaufend eingebracht, in die der im Fußbereich der Schräge an die Ratsche angekoppelte Hebel eingeschwenkt werden kann. Um eine kompakte Bauweise zu erreichen, kann der Hebel beidseitig Lagerschenkel aufweisen, die die Ratschentrommel übergreifen, so dass der Hebel auf der gleichen Achse angeordnet werden kann und relativ gegenüber der Ratschentrommel verstellbar ist, wobei die Mitnehmer in die Ratsche zum Vordrehen eingreifen. Die Sperre übernimmt der zuvor schon beschriebene federbelastete Riegel. Die Mitnehmer müssen selbstverständlich auch federnd gelagert sein, da sie beim Verschwenken des Ratschenhebels zunächst über die Zahnflanken automatisch gleiten müssen. Die Mitnehmer sind über ein Brückenglied miteinander verbunden, so dass sie beim Lösen der Ratsche aus den Verzahnungen herausgefahren werden können.

Die seitlichen Gurte, die rückseitig vorstehen, sind durch in die rückseitige Wandung des Sitzverankerungselementes eingebrachte Durchbrüche und Umlenkungen geführt. Sie können an einem Spanngurt angenäht sein, der als Zentralgurt auf die Ratschentrommel aufwickelbar ist. Im Falle der Einzelausführung sind zwei Ratschentrommeln vorzusehen. Nach dem Verbinden der Konnektoren mit den Fixierelementen an dem Fahrzeugsitz können dann die Gurte über den zentralen Spanngurt mittels der Spannvorrichtung mit der Ratsche und dem Hebel gespannt werden, wobei das Sitzverankerungselement sowohl gegen die Rückenlehne des Fahrzeugsitzes als auch auf den Sitz des Fahrzeugsitzes gedrückt wird und unter Spannung hier anliegt, so dass ein sicherer Halt gegeben ist. Um einen Quergurt besser führen und umlenken zu können, kann ferner vorgesehen sein, dass parallel zu dem mittleren Wandabschnitt der Wandung des Sitzverankerungselementes, an welchem der Hebel befestigt und gelagert ist, seitlich Durchbrüche vorgesehen sind, durch die der Quergurt oder der Beckengurtabschnitt des fahrzeugeigenen Sicherheitsgurtes wellenförmig hindurchziehbar ist. Er wird also zusätzlich zu der klemmenden Ablenkung im Bereich der Ausnehmung, in die der Hebel angepasst eingreift, über die weiteren Durchbrüche umgelenkt.

Das Sitzverankerungselement besteht aus Kunststoff. Es kann sogar aus einem Kunststoffblasteil gefertigt werden, an dem dann die Teile anmontiert werden.

Die einzelnen Ausgestaltungsformen sind in den Unteransprüchen angegeben.

Die Erfindung wird nachfolgend anhand des in den Zeichnungen dargestellten Ausführungsbeispiels ergänzend erläutert.

In den Zeichnungen zeigen:
- Fig. 1: eine Draufsicht eines auf einen Fahrzeugsitz aufstellbaren und hieran befestigbaren Sitzver-ankerungselementes mit zwei rückseitig heraus-geführten Gurten mit Konnektoren,
- Fig. 2: das in Fig. 1 dargestellte Sitzverankerungs-element in einer Schnittzeichnung längs dem Schnitt A-A,
- Fig. 3: eine perspektivische Darstellung des Sitzver-ankerungselementes nach den Fig. 1 und 2 mit einem Quergurt,
- Fig. 4: eine weitere Ausführung eines Sitzverankerungs-elementes in einer Schnittzeichnung ent-sprechend Fig. 2, jedoch mit Stangen einer festen ISOFIX-Verbindung.

In den Zeichnungen ist ein Sitzverankerungselement 1 aus Kunststoff geformt dargestellt, das an einem Kraftfahrzeugsitz wahlweise über einen Quergurt 6 oder über Gurte 2 und 3 mit daran befestigten Konnektoren 4 und 5 befestigbar ist. Auf derartige Sitzverankerungselemente 1 werden Kindersitze, die aus einem Sitzteil und einem Rückenlehnenteil bestehen oder alternativ auch Babyträger, nämlich Schalenliegesitze für Kleinkinder, aufgesetzt und daran durch Verriegelung gesichert gehalten.

Solche Sitzverankerungselemente können auch mit Signalisierungseinrichtungen verbunden sein, wie sie aus der DE 20 2009 001 975 U1 bekannt sind. Das Sitzverankerungselement 1 weist zur Aufnahme solcher Einsätze Befestigungselemente 9 und 10 auf, in die entsprechende Gegenelemente an den Einsatz eingreifen. Der Einsatz ist im Übrigen durch Aufnahmewände 25 und Halteansätze 26 ausgerichtet seitlich gehalten, sowie durch die rückseitige, hochgezogene Wandung 9, 10. Das Sitzverankerungselement 1 stützt sich mit der Rückseite der Wandung 19 an der Rückenlehne und mit der Unterseite an der Oberfläche des Fahrzeugsitzes ab. Um Gewichtseinsparung einerseits und andererseits eine hohe Formstabilität zu erreichen, sind weiterhin Aussparungen 29 in den Bereichen vorgesehen, die für die Fixierung des Einsatzes nicht benötigt werden. Weitere Durchbrüche 21 und 22 sind im hinteren Bereich, nämlich in der Wandung 19, vorgesehen. Diesen Durchbrüchen 21, 22 kommt, wie später noch ausgeführt, dann eine Bedeutung zu, wenn das Sitzverankerungselement 1 am Fahrzeugsitz mittels eines Quergurtes 6 gesichert werden soll.

Auf dem Boden des Sitzverankerungselementes 1 ist hinter der Tiefenmitte, mittig und symmetrisch zur Längsachse des Sitzverankerungselementes 1, ein U-förmiger Träger 30 einer Spanneinrichtung montiert. Die Spanneinrichtung besteht im Wesentlichen aus einer Ratschentrommel 12 mit beidseitig vorgesehen Ratschen 13, die aus sägezahnförmigen Zahnkränzen bestehen. Als Gesperre greift in die Zahnlücken ein an dem Träger 30 befestigter Riegel 27 ein. Dieser Riegel 27 ist gegen die Kraft einer Feder von den Ratschen 13 abziehbar. Auf die Ratschentrommel 12 ist der Spanngurt 11 aufwickelbar, der in dem Sitzverankerungselement 1 untenseitig um eine Umlenkung 23 geführt ist.

An diesem Spanngurt 11 sind die beiden seitlich durch die Durchbrüche 21 und weiteren nicht dargestellten Führungen nach hinten herausgeführten Gurte 2, 3 befestigt, so dass beim Anziehen des Spanngurtes 11 automatisch beide Gurte 2 und 3 mit angezogen werden. An den Enden dieser Gurte 2, 3 befinden sich Konnektoren 4, 5, an denen das Sitzverankerungselement 1 an Fixierelementen 7, 8 am Fahrzeugsitz befestigbar ist. Bei den Fixierelementen 7 und 8 handelt es sich um Querbolzen, die genormte ISOFIX-Anker sind. Auf der gleichen Achse der Ratschentrommel 12 ist ebenfalls verschwenkbar ein Hebel 14 gelagert, der mit beidseitigen Lagerschenkeln 18 relativ gegenüber der Ratschentrommel 12 verschwenkbar ist. In dem Hebel 14 ist gegen die Kraft einer Feder verschiebbar ein Mitnehmer 28 gelagert, der über die Zahnflanken der Zähne der Ratsche 13 beim Verschwenken nach rechts gleitet und in die Zahnlücken eingreift, so dass beim Verschwenken des Hebels 14 aus der rechten Position in die linke Position die Ratschentrommel 12 um eine definierte Anzahl der überfahrenen Zähne der Ratsche 13 vorgedreht werden kann, wobei der Spanngurt 11 aufgerollt wird. Dies hat zur Folge, dass über die Verbindung der Konnektoren 4, 5 mit den Fixierelementen 7, 8 eine Verkürzung der Gurte 2, 3 gegeben ist, so dass das Sitzverankerungselement 1 unter Spannung auf dem Fahrzeugsitz befestigt wird, wobei die Rückseite der Wandung 19 gegen die Rückenlehne des Fahrzeuges drückt.

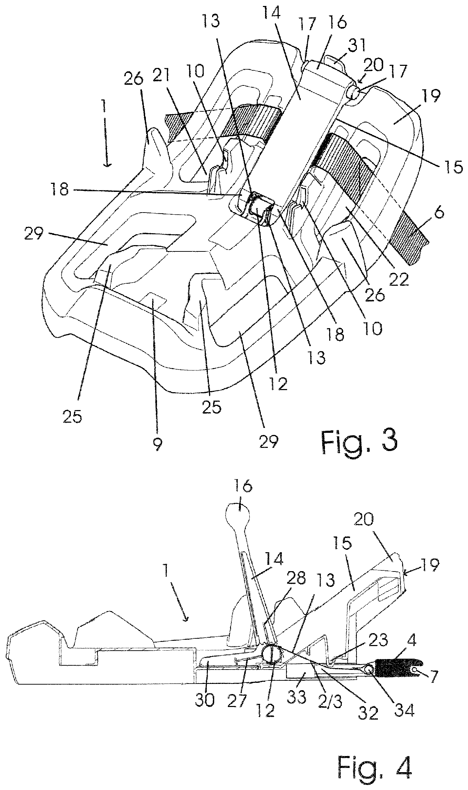

Ist das Sitzverankerungselement 1 über die Ratschentrommel 12 und die Gurte 2, 3 sowie die Konnektoren 4, 5 gesichert am Fahrzeugsitz gehalten, so kann der Hebel 14 in die Lagerausnehmung 15 in die Wandung 19 geschwenkt werden und ist zumindest teilweise hierin versenkt. Die Breite der Ausnehmung 15 ist etwas größer als die Breite des Hebels 14, so dass beidseitig Klemmspalten entstehen. Wenn das Sitzverankerungselement 1 nicht über die Gurte 2, 3 am Fahrzeugsitz gesichert werden kann oder soll, ist es möglich, im aufgestellten Zustand des Hebels 14 einen Quergurt 6 einzulegen oder, wie in Fig. 3 dargestellt, durch die Durchbrüche 21 und 22 hindurchzuführen, mit dem das Sitzverankerungselement 1 alternativ oder zusätzlich an dem Fahrzeugsitz befestigbar ist. Der Quergurt 6 kann beispielsweise der Beckengurtabschnitt eines Dreipunktgurtes sein. Es kann aber auch ein gesonderter Quergurt 6 mit an den Enden angebrachten Schlosszungen vorgesehen sein, die in vorhandene Steckschlösser für den fahrzeugeigenen Sicherheitsgurt hineingesteckt werden können.

Aus Fig. 3 ist ersichtlich, dass dem Hebel 14 eine Doppelfunktion zukommt. Zum einen ist dieser zur Betätigung der Spanneinrichtung mit der Ratschentrommel 12 vorgesehen, zum anderen dient er aber auch zum Einklemmen des Quergurtes 6 und damit zum Spannen desselben. Um diese Spannung nach dem Befestigen sicherzustellen, ist ferner vorgesehen, dass der Hebel 14 über den Handgriff 16, der zur Betätigung vorgesehen ist, mittels einer Arretiereinrichtung, die im Detail nicht dargestellt ist, an der Wandung 19 fixiert werden kann. Durch Niederdrücken greift beispielsweise ein Rastbolzen am Handgriff 16 in eine Ausnehmung in ein abdrückbares Federelement 31 ein. Dieses Felderelement 31 kann nach hinten abgedrückt werden, um wieder eine Freigabe des Bolzens zu erreichen. Es ist aber auch möglich, beispielsweise eine Rastnase in eine Rastausnehmung eingreifen zu lassen, die dann über die seitlich vorgesehenen Betätigungselemente 17 am Handgriff 16 zum Lösen der Verbindung verschwenkt wird.

Der Handgriff 16 ist versenkt in der Wandung 19 in einer dort vorgesehenen Lagerungsausnehmung 20 gelagert. Das Ausführungsbeispiel zeigt, dass auf zwei verschiedene Arten und Weisen mit ein- und derselben Ausgestaltung das Sitzverankerungselement an einem Fahrzeugsitz befestigt werden kann. Es ist aber auch möglich, zusätzlich noch die dritte Befestigungsmöglichkeit bekannter Art über in der Länge einstellbare Teleskopstangen vorzusehen, an denen Konnektoren rückseitig angebracht sind, die mit den Fixierelementen 7 und 8, den ISOFIX-Ankern, verbindbar sind.

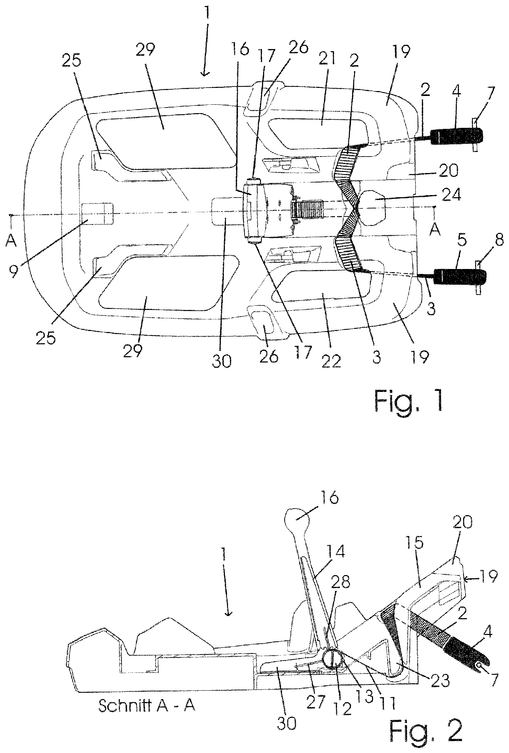

In Fig. 4 ist ein Längsschnitt durch ein Sitzverankerungselement 1 nach Fig. 1, entsprechend dem Schnitt in Fig. 2, dargestellt, der alle wesentlichen Elemente aufweist, die in Fig. 2 ebenfalls eingezeichnet sind, so dass auf die Figurenbeschreibung zu Fig. 2 diesbezüglich verwiesen werden kann. So sind ebenfalls eingezeichnet: Der Hebel 14 mit dem sich daran befindlichen Handgriff 16, die Ratsche 13, der darauf wirkende Mitnehmer 28 an dem Hebel 14 und der damit zusammenwirkende Riegel 27, der am Träger 30 gegen eine Feder verschiebbar gelagert ist. Des Weiteren befinden sich in der Schrägwandung 19 die Ausnehmung 15 für den Hebel 14 und die Lagerungsausnehmung 20 für den Handgriff 16. Weiterhin ist eine Umlenkung 23 beidseitig jeweils vorgesehen, um auf den Gurt 2 bzw. den an der anderen Seite verlaufenden Gurt 3 zu wirken. Es können also zwei Ratschentrommeln hintereinander angeordnet sein, es können aber auch die beiden Gurte 2 und 3 zusammengeführt sein und an einem nicht dargestellten Spanngurt fixiert sein. Die seitlichen Gurte 2 und 3 sind auf Bolzen 34 mit einer Öse aufgesetzt. Diese Bolzen 34 sind vorstehend an je einer Stange 32, im Ausführungsbeispiel eine Profilschiene, angebracht. An jeder Stange 32 befindet sich rückseitig ein Konnektor 4, der auf ein Fixierelement 7 am Fahrzeugsitz oder an der Karosserie aufsteckbar ist, wenn die Stange 32 nach hinten geschoben wird. Die Stange 32 ist in einer Lagerkammer 33 verschiebbar gelagert. Die einzelnen Lagerelemente sowie die eventuell auf die Stangen 32 wirkenden Mechaniken sind der Einfachheit halber hier nicht angegeben. Die beiden Stangen 32, die seitlich angeordnet sind, können selbstverständlich auch über ein Brückenelement miteinander verbunden sein, an dem dann ein einziger Spanngurt befestigbar ist, um die Stangen 32 in die Lagerkammern hineinziehen bzw. darin nach vorne ziehen zu können. Dadurch wird, nachdem der Konnektor 4 an dem Fixierelement 7 fixiert ist, der Sitz mit der Wandung 19 gegen die Rückenlehne des Fahrzeugsitzes gedrückt sowie auf den Sitz gleichzeitig gepresst. Der notwendige Druck wird durch Betätigung der Ratsche 13 ausgeübt, indem der Hebel 16, wie auch anhand der vorhergehenden Figuren beschrieben, betätigt wird, um die Gurte 2 und 3 aufzuwickeln und darüber eine Spannung auf das Sitzverankerungselement 1 auszuüben. Im gespannten Zustand kann der Hebel 14 in die vorgesehene Ausnehmung 15 hineingeschwenkt werden. Die Ausführung zeigt, dass die hier zu Anwendung kommende Ratsche 13 sowohl in Verbindung mit starren Stangen zur Herstellung einer ISOFIX-Verbindung eingesetzt werden kann als auch in Verbindung mit flexiblen Gurten, die an den Fixierelementen 7 und 8 befestigbar sind.

### Bezugszeichenliste

- 1: Sitzverankerungselement
- 2: Gurt
- 3: Gurt
- 4: Konnektor
- 5: Konnektor
- 6: Quergurt
- 7: Fixierelement
- 8: Fixierelement
- 9: Befestigungselement
- 10: Befestigungselement
- 11: Spanngurt
- 12: Ratschentrommel
- 13: Ratsche
- 14: Hebel
- 15: Ausnehmung
- 16: Handgriff
- 17: Betätigungselement
- 18: Lagerungsschenkel
- 19: Wandung
- 20: Lagerausnehmung
- 21: Durchbruch
- 22: Durchbruch
- 23: Umlenkung
- 24: Umlenkung
- 25: Aufnahmewand
- 26: Halteansätze
- 27: Riegel
- 28: Mitnehmer
- 29: Aussparung
- 30: Träger
- 31: Federelement
- 32: Stangen
- 33: Lagerkammer
- 34: Bolzen

## Patentansprüche

1. Sitzverankerungselement (1) für Kindersicherheitssitze oder Babyträger auf einem Fahrzeugsitz, das mittels Konnektoren (4,5) an den Enden eines eigenen Gurtsystems aus zwei seitlich und/oder rückseitig zugänglichen Gurten (2, 3) oder an den Enden eines Quergurtes (6) oder an den Enden rückseitig vorstehender, seitlich zur Mittenlängsachse verschiebbar gelagerter Stangen (32) an Fixierelementen (7, 8) im oder am Fahrzeugsitz oder an der Fahrzeugkarosserie hinter dem Fahrzeugsitz befestigbar ist, welches Sitzverankerungselement (1) obenseitig mindestens ein vorderes (9) und mindestens ein hinteres Befestigungselement (10) zum Fixieren des Kindersicherheitssitzes oder des Babyträgers hieran und mindestens eine Spannvorrichtung für die Teile aufweist, an deren Enden sich die Konnektoren (4, 5) befinden, wobei die Gurte (2, 3) des Gurtsystems oder die mit den Stangen (32) verbundenen Gurte (2) oder ein mit den einzelnen Gurten (2, 3) verbundener gemeinsamer Spanngurt (11) auf einer Ratschentrommel (12) der Spannvorrichtung aufwickelbar sind oder ist und nach Entriegelung eines Gesperres der Ratsche (13) mindestens teilweise abwickelbar sind oder ist, welche Ratschentrommel (12) in dem Sitzverankerungselement (1) drehbar gelagert ist, **dadurch gekennzeichnet, dass** mit der Ratsche (13) ein in dem Sitzverankerungselement (1) verschwenkbar gelagerter Hebel (14) gekoppelt ist, der in eine Ausnehmung (15) in dem Sitzverankerungselement (1) aus einer aufgestellten Ratschenbetätigungsstellung zum Spannen der Gurte (2, 3) oder des Spanngurtes (11) in eine versenkte Ruhestellung einschwenkbar ist, wobei mindestens die Achse des Lagers des Hebels quer zur Längsachse des Sitzverankerungselement (1) verläuft.

2. Sitzverankerungselement nach Anspruch 1, **dadurch gekennzeichnet, dass** der Hebel (14) gleich breit oder breiter als die Breite der Ratschentrommel (12) ist und in eine konturenangepasste U-förmige Ausnehmung (15) arretierend einschwenkbar ist.

3. Sitzverankerungselement nach Anspruch 1 oder 2, **dadurch gekennzeichnet, dass** in Querrichtung über die Ausnehmung verlaufend der Beckengurt eines Fahrzeuggurtes oder der Beckengurtabschnitt eines Dreipunkt-Fahrzeuggurtes allein oder gemeinsam mit dem Schultergurtabschnitt oder ein gesonderter Quergurt (6) einlegbar ist, dessen freien Gurtenden jeweils über eine Schlosszunge mit einem Schloss am fahrzeugeigenen Sitz oder über Verbindungselemente hiermit verbindbar sind.

4. Sitzverankerungselement nach Anspruch 2 oder 3, **dadurch gekennzeichnet, dass** der Quergurt (6) nur bei in Ruhestellung befindlichem Hebel (14) unter diesem quer durch die Ausnehmung (15) verläuft.

5. Sitzverankerungselement nach Anspruch 1, **dadurch gekennzeichnet, dass** der Hebel (14) an der Oberseite einen Handgriff (16) aufweist.

6. Sitzverankerungselement nach Anspruch 1, **dadurch gekennzeichnet, dass** der Hebel (14) mittels einer Arretierungseinrichtung in der versenkten Position in der Ausnehmung (15) gehalten ist.

7. Sitzverankerungselement nach Anspruch 6, **dadurch gekennzeichnet, dass** die Arretierungseinrichtung aus einem Riegel, einer Rastnase oder einem Arretierungsbolzen besteht, der oder die an dem Hebel (14) oder an einer Wand der Ausnehmung angebracht sind und mit dem korrespondierenden Gegenelement an dem anderen Teil zusammenwirkt, und dass an einem der Teile mindestens ein Betätigungselement (17) für eine Entriegelungsmechanik vorgesehen ist, bei dessen Betätigung die Arretiereinrichtung den Hebel (14) zum Verschwenken freigibt.

8. Sitzverankerungselement nach Anspruch 5 und 6, **dadurch gekennzeichnet, dass** im Handgriff (16) zwei seitlich vorstehende Betätigungselemente (17) gegen die Kraft einer Federanordnung verschiebbar gelagert sind, die bei gleichzeitiger Bedienung die Arretierungseinrichtung freigeben.

9. Sitzverankerungselement nach Anspruch 2, **dadurch gekennzeichnet, dass** der Hebel (14) zwei seitlich die Ratschentrommel (12) übergreifende Lagerschenkel (18) aufweist, die auf der Achse der Ratschentrommel (12) verschwenkbar gelagert sind.

10. Sitzverankerungselement nach Anspruch 1, **dadurch gekennzeichnet, dass** das Sitzverankerungselement (1) an der Rückseite eine hochgezogene Wandung (19) aufweist, die sich an der Rückenlehne des Fahrzeugsitzes abstützt.

11. Sitzverankerungselement nach Anspruch 9, **dadurch gekennzeichnet, dass** die Wandung (19) in der Tiefe des Sitzpolsterelementes schräg von unten nach oben verläuft und dass in dieser die U-förmige Ausnehmung (15) zur Aufnahme des Hebels (14) eingebracht ist.

12. Sitzverankerungselement nach Anspruch 5 und 10, **dadurch gekennzeichnet, dass** im oberen Abschnitt der Wandung (19) eine Lagerausnehmung (20) zur Aufnahme des Handgriffes (16) des Hebels (14) vorgesehen ist.

13. Sitzverankerungselement nach Anspruch 1, **dadurch gekennzeichnet, dass** die seitlichen Gurte (2, 3) durch in die rückseitige Wandung (19) des Sitzverankerungselementes (1) eingebrachte Durchbrüche (21, 22) und Umlenkungen (23) so geführt sind, dass beim Verbinden der Konnektoren (4, 5) mit den Fixierelementen (7, 8) und beim Spannen der Gurte (2, 3) oder des gemeinsamen Spanngurtes (11) das Sitzverankerungselement (1) auf dem Fahrzeugsitz bei gleichzeitigem Druck gegen die Rückenlehne des Fahrzeugsitzes unter Spannung anliegt.

14. Sitzverankerungselement nach Anspruch 1 und 12, **dadurch gekennzeichnet, dass** die beiden Seitengurte (2, 3) oder die beiden Gurte (2, 3) an den Stangen (32) gemeinsam an einem Spanngurt (11) befestigt sind oder ein Spanngurt (11) an einem die beiden Stangen (32) verbindenden Brückenteil befestigt ist und dass der Spanngurt (11) durch eine zentrale Umlenkung (23, 24) derart geführt ist, dass das Aufwickelende auf die Ratschentrommel (12) aufwickel- und abwickelbar ist.

15. Sitzverankerungselement nach Anspruch 1, 3 und 10, **dadurch gekennzeichnet, dass** parallel zu dem mittleren Wandabschnitt der Wandung (19) des Sitzverankerungselementes (1), an welchem der Hebel befestigt und gelagert ist, seitliche Durchbrüche (21, 22) vorgesehen sind, durch die der Quergurt (6) oder der Beckengurtabschnitt des fahrzeugeigenen Sicherheitsgurtes hindurchgeführt ist.

16. Sitzverankerungselement nach einem der vorhergehenden Ansprüche, **dadurch gekennzeichnet, dass** das Sitzverankerungselement (1) aus Kunststoff besteht.

## Claims

1. Seat anchoring element (1) for child safety seats or baby carriers on a vehicle seat, which is securable to fixing elements (7, 8) in or at the vehicle seat or at the vehicle bodywork behind the vehicle seat by means of connectors (4, 5) at the ends of an individual belt system of two belts (2, 3) accessible laterally and/or at the back or at the ends of a transverse belt (6) or at the ends of rods (32) projecting rearwardly and mounted to be displaceable laterally with respect to the centre longitudinal axis, which seat anchoring element (1) has at the top at least one front fastening element (9) and at least one rear fastening element (10) for fixing the child safety seat or the baby carrier thereto and at least one clamping device for the parts, at the ends of which the connectors (4, 5) are disposed, wherein the belts (2, 3) of the belt system or the belts (2) connected with the rods (32) or a common tightening belt (11) connected with the individual belts (2, 3) can be wound up on a ratchet drum (12) of the clamping device and after unlocking a lock of the ratchet (13) can be at least partly unwound, which ratchet drum (12) is rotatably mounted in the seat anchoring element (1), **characterised in that** a lever (14) pivotably mounted in the seat anchoring element (1) is coupled with the ratchet (13) and is pivotable in a recess (15) in the seat anchoring element (1) from an erected ratchet actuating setting for tightening the belts (2, 3) or the tightening belt (11) into a recessed rest setting, wherein at least the axis of the bearing of the lever extends transversely to the longitudinal axis of the seat anchoring element (1).

2. Seat anchoring element according to claim 1, **characterised in that** the lever (14) is the same width as or wider than the width of the ratchet drum (12) and is pivotable in locking manner into a contour-matched U-shaped recess (15).

3. Seat anchoring element according to claim 1 or 2, **characterised in that** the lap belt of a vehicle belt or the lap belt section of a three-point vehicle belt is placeable by itself or together with the shoulder belt section for a separate transverse belt (6) to extend in transverse direction over the recess, the free belt ends of that belt or belt section each being connectible by way of a lock tongue with a lock to the seat individual to the vehicle or therewith by way of connecting elements.

4. Seat anchoring element according to claim 2 or 3, **characterised in that** the transverse belt (6) extends transversely through the recess (15) under the lever (14) only when the lever is in the rest setting

5. Seat anchoring element according to claim 1, **characterised in that** the lever (14) has a grip (16) at the upper end.

6. Seat anchoring element according to claim 1, **characterised in that** the lever (14) is held in the recessed position in the recess (15) by means of a locking device.

7. Seat anchoring element according to claim 6, **characterised in that** the locking device consists of a bar, a detent lug or a locking pin, which is mounted on the lever (14) or a wall of the recess and which co-operates with the corresponding counter-element at the other part, and that provided at one of the parts is at least one actuating element (17) for an unlocking mechanism, on actuation of which the locking device frees the lever (14) for pivotation.

8. Seat anchoring element according to claim 5 and 6, **characterised in that** two laterally protruding actuating elements (17) are mounted in the grip (16) to be displaceable against the force of a spring arrangement, which elements when simultaneously operated release the locking device.

9. Seat anchoring element according to claim 2, **characterised in that** the lever (14) has two bearing limbs (18) which engage over the ratchet drum (12) and which are pivotably mounted on the axle of the ratchet drum (12).

10. Seat anchoring element according to claim 1, **characterised in that** the seat anchoring element (1) has at the rear side an elevated wall (19) supported on the backrest of the vehicle seat.

11. Seat anchoring element according to claim 9, **characterised in that** the wall (19) extends in the depth of the seat cushion element at an inclination upwardly from below and that the U-shaped recess (15) for reception of the lever (14) is formed in this.

12. Seat anchoring element according to claim 5 and 10, **characterised in that** a bearing recess (20) for reception of the grip (16) of the lever (14) is provided in the upper section of the wall (19).

13. Seat anchoring element according to claim 1, **characterised in that** the lateral belts (2, 3) are so guided through passages (21, 22) and deflection points (23) formed in the rear wall (19) of the seat anchoring element (1) that when the connectors (4, 5) are connected with the fixing elements (7, 8) and when the belts (2, 3) or the common tightening belt (11) is or are tightened the seat anchoring element (1) bears under tension on the vehicle seat with simultaneous pressure against the backrest of the vehicle seat.

14. Seat anchoring element according to claim 1 and 12, **characterised in that** the two lateral belts (2, 3) or the two belts (2, 3) at the rods (32) are fastened in common to a tightening belt (11) or a tightening belt (11) is fastened to a bridge part connecting the two rods (32) and that the tightening belt (11) is so guided through a central deflection point (23, 24) that the winding end can be wound up on and unwound from the ratchet drum (12).

15. Seat anchoring element according to claim 1, 3 and 10, **characterised in that** lateral passages (21, 22) through which the transverse belt (6) or the lap belt section of the safety belt individual to the vehicle is guided are provided parallel to the centre wall section, at which the lever is fastened and mounted, of the wall (19) of the seat anchoring element (1).

16. Seat anchoring element according to any one of the preceding claims, **characterised in that** the seat anchoring element (1) consists of plastics material.

## Revendications

1. Elément d'ancrage de siège (1) pour les sièges de sécurité pour enfant ou les porte-bébés sur un siège de véhicule, qui peut être fixé au moyen de connecteurs (4,5) aux extrémités d'un système de ceintures propre constitué de deux ceintures (2, 3) accessibles par le côté et/ou par l'arrière ou aux extrémités d'une ceinture transversale (6) ou aux extrémités de tringles (32) en saillie vers l'arrière, montées de manière à être mobiles latéralement par rapport à l'axe longitudinal médian sur des éléments de fixation (7, 8) dans ou contre le siège de véhicule ou contre la carrosserie de véhicule derrière le siège de véhicule, ledit élément d'ancrage de siège (1) comportant sur le dessus au moins un élément de fixation avant (9) et au moins un élément de fixation arrière (10) pour la fixation contre ceux-ci du siège de sécurité pour enfant ou du siège pour bébé, et au moins un dispositif de serrage pour les pièces, aux extrémités duquel se trouvent les connecteurs (4, 5), dans lequel les ceintures (2, 3) du système de ceintures ou les ceintures (2) raccordées aux tringles (32) ou une sangle de serrage (11) commune raccordée aux différentes ceintures (2, 3) étant enroulables sur un tambour à cliquet (12) du dispositif de serrage, et au moins en partie déroulables après déverrouillage d'un encliquetage du cliquet (13), ledit tambour à cliquet (12) étant monté de manière rotative dans l'élément d'ancrage de siège (1), **caractérisé en ce qu'**un levier (14) monté de manière pivotante dans l'élément d'ancrage de siège (1) est accouplé au cliquet (13), lequel peut être engagé par pivotement dans un évidement (15) de l'élément d'ancrage de siège (1), d'une position redressée d'actionnement de cliquet pour le serrage des ceintures (2, 3) ou de la sangle de serrage (11) vers une position de repos, dans lequel au moins l'axe du palier du levier s'étend perpendiculairement à l'axe longitudinal de l'élément d'ancrage de siège (1).

2. Elément d'ancrage de siège selon la revendication 1, **caractérisé en ce que** le levier (14) est de largeur égale ou supérieure à la largeur du tambour à cliquet (12) et est engageable par pivotement pour être bloquer dans un évidement (15) en U à contour adapté.

3. Elément d'ancrage de siège selon la revendication 1 ou 2, **caractérisé en ce que** la ceinture sous-abdominale d'une ceinture de véhicule s'étendant sur l'évidement en direction transversale ou la section sous-abdominale d'une ceinture de véhicule à trois points, sont insérables seules ou avec la section d'épaule, ou une ceinture transversale distincte (6)dont les extrémités libres peuvent être raccordées chacune par une languette de bouclage ou par des éléments de connexion à une boucle contre le siège propre au véhicule.

4. Elément d'ancrage de siège selon la revendication 2 ou 3, **caractérisé en ce que** la ceinture transversale (6) ne s'étend transversalement par l'évidement (15) en dessous du levier (14) que si celui-ci se trouve en position de repos.

5. Elément d'ancrage de siège selon la revendication 1, **caractérisé en ce que** le levier (14) comporte une poignée (16) à son sommet.

6. Elément d'ancrage de siège selon la revendication 1, **caractérisé en ce que** le levier (14) est retenu en position de retrait dans l'évidement (15) au moyen d'un dispositif de verrouillage.

7. Elément d'ancrage de siège selon la revendication 6, **caractérisé en ce que** le dispositif de verrouillage se compose d'un verrou, d'un ergot d'enclenchement ou d'une goupille de verrouillage appliqués contre le levier (14) ou contre une paroi de l'évidement, et coopère avec l'élément complémentaire correspondant sur l'autre pièce, et **en ce qu'**au moins un élément d'actionnement (17) pour un mécanisme de déverrouillage est prévu sur une des pièces, dont l'actionnement par le dispositif de verrouillage entraîne la libération du levier (14) pour pivoter.

8. Elément d'ancrage de siège selon les revendications 5 et 6, **caractérisé en ce que** deux éléments d'actionnement (17) en saillie latérale sont montés dans la poignée (16) de manière à être déplaçables contre la force d'un dispositif de ressort, et libèrent le dispositif de verrouillage en cas d'actionnement simultané.

9. Elément d'ancrage de siège selon la revendication 2, **caractérisé en ce que** le levier (14) présente deux branches de palier (18) entourant le tambour à cliquet (12) sur ses côtés et montés de manière pivotante sur l'axe du tambour à cliquet (12).

10. Elément d'ancrage de siège selon la revendication 1, **caractérisé en ce que** l'élément d'ancrage de siège (1) présente une paroi (19) relevée à l'arrière, laquelle s'appuie contre le dossier du siège de véhicule.

11. Elément d'ancrage de siège selon la revendication 9, **caractérisé en ce que** la paroi (19) s'étend obliquement du bas vers le haut dans la profondeur de l'élément de rembourrage du siège, et **en ce que** l'évidement en U (15) pour la réception du levier (14) est ménagé dans celle-ci.

12. Elément d'ancrage de siège selon les revendications 5 et 10, **caractérisé en ce qu'**une ouverture de palier (20) pour la réception de la poignée (16) du levier (14) est prévue dans la partie supérieure de la paroi (19).

13. Elément d'ancrage de siège selon la revendication 1, **caractérisé en ce que** les ceintures (2, 3) latérales sont passées par des traversées (21, 22) et des renvois (23) réalisés dans la paroi (19) arrière de l'élément d'ancrage de siège (1), de manière à appliquer sous tension l'élément d'ancrage de siège (1) sur le siège de véhicule avec une pression simultanée contre le dossier du siège de véhicule lorsque les connecteurs (4, 5) sont assemblés aux éléments de fixation (7, 8) et lorsque les ceintures (2, 3) ou la sangle de serrage(11)commune sont serrées.

14. Elément d'ancrage de siège selon les revendications 1 et 12, **caractérisé en ce que** les deux ceintures latérales (2, 3) ou les deux ceintures (2, 3) sur les tringles (32) sont fixées ensemble sur une sangle de serrage (11), ou une sangle de serrage (11) est fixée sur une pièce de pontage reliant les deux tringles (32), et **en ce que** la sangle de serrage (11) est passée par un renvoi central (23, 24) de manière à permettre l'enroulement et le déroulement de l'extrémité d'enroulement sur le tambour à cliquet (12).

15. Elément d'ancrage de siège selon les revendications 1, 3 et 10, **caractérisé en ce que** parallèlement à la partie centrale de la paroi (19) de l'élément d'ancrage de siège (1) contre laquelle est fixé et monté le levier, sont prévues des traversées (21, 22) latérales par lesquelles est passée la ceinture transversale (6) ou la section sous-abdominale de la ceinture de sécurité propre au véhicule.

16. Elément d'ancrage de siège selon l'une des revendications précédentes, **caractérisé en ce que** ledit élément d'ancrage de siège (1) est en matière plastique.
